# EUROPEAN PATENT APPLICATION

(11) **EP 0 554 520 A1**
(43) Date of publication of application: **11.08.1993**
(21) Application number: 92118746.4
(22) Date of filing: 02.11.1992
(51) Int. Cl.: B65B 11/08, B65B 25/02, A47G 7/08

(54) **Method for securing a decorative cover about a flower pot**

(30) Priority: 06.02.1992 US 832096
(71) Applicant: Highland Supply Corporation, Highland, Illinois 62249 (US)
(72) Inventor: Weder, Donald E., Highland, Illinois 62249 (US)
(74) Representative: Baillie, Iain Cameron

(57) **Abstract**

A method for securing a sheet of material (12) about a flower pot (16) for providing a decorative cover to the flower pot, using a band applicator (30) with an object opening. The sheet of material is held in place on the flower pot and the flower pot with the sheet of material held there about is inserted into the object opening of the band applicator. The band applicator applies a band about the sheet of material and the flower pot whereby the sheet of material is secured to the flower pot via the band.

## Description

### FIELD OF THE INVENTION

The present invention relates generally to means for applying a sheet of material generally about the outer peripheral surface of a flower pot utilizing a band.

### BRIEF DESCRIPTION OF THE DRAWINGS

Figure 1 is a sectional, diagrammatic view illustrating a flower pot generally positioned above a sheet of material and a cover forming device in position for forming the sheet of material about the outer peripheral surface of the flower pot and diagrammatically showing a band applicator for securing a band about the sheet of material after the sheet of material has been formed about the flower pot for securing the sheet of material in the formed position extending about the outer peripheral surface of the flower pot.

Figure 2 is similar to Figure 1, but shows the flower pot and the sheet of material moved into a position in the cover forming device wherein the sheet of material is formed about the outer peripheral surface of the flower pot.

Figure 3 is a view similar to Figure 1, but showing the flower pot with the sheet of material formed thereabout removed from the cover forming device and disposed in the band applicator wherein a band is secured about the sheet of material for holding the sheet of material in position extending about the outer peripheral surface of the flower pot.

Figure 4 is a schematic, diagrammatic view showing the system for automatically feeding the material to be applied about the flower pot to the cover forming device.

### SUMMARY OF THE INVENTION

The invention concerns a method and apparatus for securing a sheet of material about the outer peripheral surface of a flower pot, wherein the flower pot includes a flower pot opening extending through an upper end of the flower pot. The sheet of material is formed about the outer peripheral surface of the flower pot, wherein the sheet of material substantially encompasses the entire outer peripheral surface of the flower pot while leaving the upper end of the flower pot uncovered.

A band applicator and a band are provided, and the band is placed, using the band applicator, about the sheet of material for securing the sheet of material in position disposed about the outer peripheral surface of the flower pot while leaving the upper end of the flower pot uncovered.

### DESCRIPTION OF THE PREFERRED EMBODIMENTS

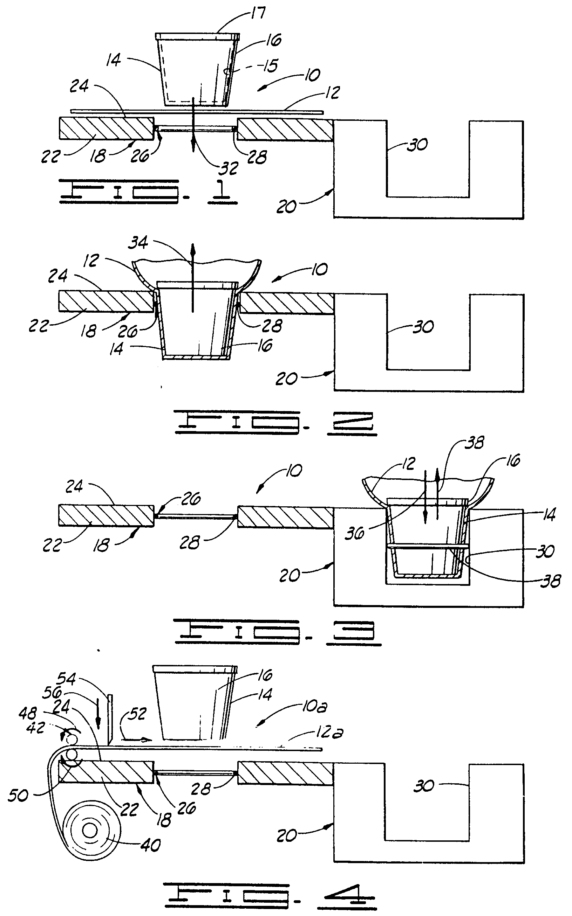

Shown in Figures 1, 2 and 3 and designated therein by the general reference numeral 10 is a system for securing a sheet of material 12 about an outer peripheral surface 14 of a flower pot 16 for the purpose of providing a decorative covering for the flower pot 16. The flower pot 16 has a flower pot opening 15 (Figure 1) which extends through an upper end 17 (Figure 1) of the flower pot 16 forming an open upper end 17. The system 10 includes a cover forming device 18 and a band applicator 20.

The cover forming device 18 comprises a platform 22 having an upper support surface 24 and a flower pot opening 26 which is formed therethrough and intersects the support surface 24. A circularly shaped applicator 28 is supported on the platform 22 and the applicator 28 preferably is constructed of a foam-like material adapted to engage the material and the flower pot without damage to the material or the flower pot. However, the applicator 28 is not necessary and the flower pot opening 26 may provide the sole means for forming the sheet of material 12 about the flower pot 16. The opening through the applicator 28 forms the flower pot opening 26. A cover forming device which is constructed and operates like the covering forming device 18 is described in detail in U.S. Patent No. 4,733,521 entitled, COVER FORMING APPARATUS, which is incorporated specifically herein by reference.

The sheet of material 12 may be a shape sustaining material such as a foil for example or a non-shape sustaining cellophane or processed organic polymer film material such as a processed organic polymer film like a polypropylene film for example. The term "processed organic polymer film" as used herein means a man-made resin such as a polypropylene as opposed to naturally occurring resins such as cellophane. A processed organic polymer film is relatively strong and not subject to tearing (substantially non-tearable), as might be the case with paper or foil. The processed organic polymer film is a substantially linearly linked processed organic polymer film and is a synthetic linear chain organic polymer where the carbon atoms are substantially linearly linked. Such films are synthetic polymers formed or synthesized from monomers. Further, a relatively substantially linearly linked processed organic polymer film is virtually waterproof which may be desirable in many applications which is not the case with an untreated paper, for example, unless the paper is treated with a water resistant coating or impregnated with water a resistant material or laminated with such water resistant material. It also should be noted that some papers, such as long fiber papers, are substantially resistant to tearing (substantially nontearable when used as a placed in accordance with the present invention). In addition, a relatively thin film of a substantially linearly linked processed organic polymer does not substantially deteriorate in sunlight. Processed organic polymer films having carbon atoms, both linearly linked and cross linked, and some cross linked polymer films, also may be suitable for use in the present invention provided such films are substantially flexible, can be made in a sheet-like format for forming the sheet of material 12.

A decorative pattern, such as a solid color and/or an embossed pattern, and/or other decorative surface ornamentation may be applied to the inner surface and/or the outer surface of the sheet of material 12.

The sheet of material 12 may be constructed of a single sheet of material or a plurality of sheets of material. When constructed of a plurality of sheets of material, each sheet of material has a thickness in a range of from less than about 1.0 mil to about 2.5 mils. However, the upper limit on the thickness of each sheet of material could be as high as 20.0 mils depending on the type of material selected. Further, the resulting flower pot cover has a thickness in a range of from less than about 1.0 mils to about 2.5 mils which could be as high as 20.0 mils depending upon the number of sheets of material utilized and the type of materials selected.

The band applicator 20 includes an object opening 30 which is sized to receive a portion of the flower pot 16. The band applicator 20 is constructed and adapted to substantially automatically apply a band about an object placed within the object opening 30. The term "band" is used herein means any material which may be secured about an object such as the flower pot 16 such as bands commonly referred to as elastic bands or rubber bands and also includes any other type of material such as string or metal or rubber or plastic which may be secured about an object such as the flower pot 16. Band applicators which are constructed to operate like the band applicator 20 described herein are commercially available such as the band applicator available from Rubber Band Technology Limited of Yaykima, Washington and referred to or identified by their mark "BandMaster". Thus, a detail description is not deemed necessary herein.

The sheet of material 12 is disposed on the upper support surface 24 of the platform 22 to a position wherein the sheet of material extends over the flower pot opening 26 and is supported on the upper support surface 24 of the platform 22 in the position substantially as shown in Figure 1. In this position of the sheet of material 12, the flower pot 16 is moved in the downward direction 32 (Figure 1) to a position wherein the bottom of the flower pot 16 engages the sheet of material 12. The flower pot 16 then is further moved in the downward direction 32 engaging the sheet of material 12 and pushing the sheet of material 12 through the flower pot opening 26. As the sheet of material 12 and the flower pot 16 are moved in the downward direction 32 through the flower pot opening 26, the cover forming device 18 engages the sheet of material and forms the sheet of material about the outer peripheral surface of the flower pot while leaving the open upper end of the flower pot 16 open. The flower pot 16 and the sheet of material 12 are moved through the flower pot opening 26 to the position shown in Figure 2 wherein the sheet of material 12 is formed about and extends about substantially the entire outer peripheral surface 16 of the flower pot 16 while leaving the opening upper end 17 of the flower pot 16 open.

After the sheet of material 12 has been formed about the flower pot 16, the flower pot 16 along with the sheet of material 12 formed thereabout is moved in the upwardly direction 34 (Figure 2) to a position wherein the flower pot 16 with the sheet of material 12 formed thereabout is removed from the flower pot opening 26 of the cover forming device 18.

After the flower pot 16 with the sheet of material 12 formed thereabout has been removed from the cover forming device 18, the flower pot 16 along with the sheet of material 12 then is positioned over the object opening 30 of the band applicator 20. The flower pot 16 with the sheet of material formed thereabout then is moved in a downwardly direction 36 (Figure 3) into the object opening 30 of the band applicator 20 to a position substantially as shown in Figure 3. In this position, the band applicator 20 is actuated to cause a band 38 to be applied about the material and generally about the outer peripheral surface 14 of the flower pot 16.

The band 32 cooperates to secure the sheet of material 12 in position disposed about the outer peripheral surface 14 of the flower pot 16. After the band 32 has been applied to the outer peripheral surface 14 and about the sheet of material 12, the flower pot 16 with the sheet of material 12 secured thereto by the band 32 is moved in the upward direction 38 (Figure 3) for removing the flower pot 16 with the sheet of material 12 secured thereto by the band 32 from the band applicator 20.

It should be noted that the sheet of material 12 in one other embodiment is hand formed about the outer peripheral surface 14 of the flower pot 16 with the sheet of material 12 extending about the entire outer peripheral surface 14 of the flower pot 16, while leaving the open upper end of the flower pot open. After hand forming the sheet of material 12 about the outer peripheral surface 14 of the flower pot 16, the flower pot 16 with the sheet of material formed thereabout then is placed into the band applicator 20 and the band 38 applied thereto. In one other embodiment, the sheet of material 12 is formed about the flower pot 16 using the cover forming device 18 and then removed from the cover forming device 18 to a position where the band 38 is secured about the sheet of material 12 and about the flower pot 16.

### EMBODIMENT OF FIGURE 4

Shown in Figure 4 is a modified system 10a for securing the sheet of material 12a about the flower pot 16 in a manner like that described before with respect to Figures 1, 2 and 3. The system 10a includes a roll of material 40 which is supported so that the material may be unrolled from the roll of material 40. The material in the roll of material 40 extends from the roll of material 40 through a pair of rollers 42 and over a portion of the upper surface 24 of the cover forming device 18.

At least one of the rollers 42 is powered. By rollingly actuating the rollers 42, the rollers 42 are rotated in the respective directions 48 and 50 as indicated in Figure 3 to move the material in a general direction 52 to a position wherein a predetermined amount of the material has been disposed generally over the flower pot opening 26 in the cover forming device 18. After the predetermined amount of material has been unrolled from the roll of material 40 in a position generally over the flower pot opening 26, a knife 54 is actuated and moved in a downward direction 56 to a position wherein the knife 54 cuttingly engages the material thereby severing the sheet of material 12a from the roll of material 40. The knife is shown in Figure 4 in a position just prior to cutting the sheet of material 12a from the roll of material 40.

After the sheet of material 12a has been cut by the knife 54, the sheet of material 12a is formed about the outer peripheral surface 14 of the flower pot 16 by moving the flower pot 16 through the cover forming device 18 in a manner like that described before. Further, the flower pot 16 with the sheet of material 12a formed thereabout then is placed into the band applicator 20 where the band 38 is applied about the sheet of material 12a and the flower pot 16 in a manner like that described before.

Changes may be made in the construction and the operation of the various components, elements and assemblies described herein and changes may be made in the steps or the sequence of steps of the methods described herein without departing from the spirit and scope of the invention as defined in the following claims.

## Claims

1. A method for securing a sheet of material about the outer peripheral surface of a flower pot wherein the flower pot includes a flower pot opening extending through an upper end of the flower pot comprising:
providing the flower pot;
providing the sheet of material;
forming the sheet of material about the outer peripheral surface of the flower pot wherein the sheet of material substantially encompasses the entire outer peripheral surface of the flower pot while leaving the upper end of flower pot uncovered;
providing a band applicator and a band; and
placing the band using the band applicator about the sheet of material for securing the sheet of material in position disposed about the outer peripheral surface of the flower pot while leaving the upper end of the flower pot uncovered.

2. The method of claim 1 wherein the band applicator includes an object opening and wherein the step of placing the band about the sheet of material further comprises:
moving the flower pot with the sheet of material formed about the outer peripheral surface therein to the object opening of the band applicator and then placing automatically the band about the sheet of material for securing the sheet of material in position disposed about the outer peripheral surface of the flower pot while leaving the flower pot opening uncovered; and
removing the flower pot with the sheet of material secured thereto by the band from the object opening in the band applicator.

3. The method of claim 1 wherein the step of forming the sheet of material about the outer peripheral surface of the flower pot further comprises:
providing a cover forming device comprising a platform having an upper support surface and a flower pot opening formed therethrough which intersects the upper support surface; and
disposing the sheet of material upon the upper support surface of the platform of the cover forming device and over the flower pot opening therein;
moving the flower pot into engagement with the sheet of material and through the flower pot opening in the cover forming device for forming the sheet of material about the outer peripheral surface of the flower pot while leaving the upper end of the flower pot uncovered.

4. The method of claim 3 wherein the step of providing the sheet of material further comprises:
unrolling material from a roll of material and moving a portion of the material over the flower pot opening in the cover forming device; and
cutting the material from the roll of material to form the sheet of material placed over the flower pot opening in the cover forming device.

5. The method for securing a sheet of material about the outer peripheral surface of a flower pot wherein the flower pot includes a flower pot opening extending through an upper end of the flower pot comprising:
providing the flower pot;
providing the sheet of material;
providing a cover forming device comprising a platform having an upper support surface and a flower pot opening formed therethrough which intersects the upper support surface;
disposing the sheet of material upon the upper support surface of the platform of the covering forming device and over the flower pot opening therein;
moving the flower pot into engagement with the sheet of material and through the flower pot opening in the cover forming device for forming the sheet of material about the outer peripheral surface of the flower pot while leaving the upper end of the flower pot uncovered;
providing a band;
placing the band about the sheet of material for securing the sheet of material in position disposed about the outer peripheral surface of the flower pot while leaving the upper end of the flower pot uncovered.

6. The method of claim 5 wherein the step of providing the sheet of material further comprises:
unrolling the material from a roll of material and moving a portion of the material over the flower pot opening in the cover forming device; and
cutting the material from the roll of material to form the sheet of material placed over the flower pot opening in the cover forming device.
